# EUROPEAN PATENT APPLICATION

(11) **EP 4 250 121 A1**
(43) Date of publication of application: **27.09.2023**
(21) Application number: 21894278.7
(22) Date of filing: 10.08.2021
(51) Int. Cl.: G06F 11/32

(54) **METHOD, DEVICE, AND PROGRAM FOR DETERMINING DIFFERENCE BETWEEN DATA SEQUENCES**

(30) Priority: 18.11.2020 JP 2020191919
(71) Applicant: Hitachi Solutions, Ltd., Tokyo 140-0002 (JP)
(72) Inventor: NANBA Masaru, Tokyo 140-0002 (JP); SAITO Shin, Tokyo 140-0002 (JP); SATO Keita, Tokyo 140-0002 (JP)
(74) Representative: Clarenbach, Carl-Philipp
(86) International application number: PCT/JP2021/029541
(87) International publication number: WO 2022/107403

(57) **Abstract**

Provided is a method that further facilitates an evaluation of a difference between a plurality of data sequences. The difference determination device 10 acquires a first sequence D1 and a second sequence D2, shifts the second sequence D2 so as to increase a correlation coefficient between the first sequence D1 and the second sequence D2 to acquire a third sequence D3, determines a difference between the first sequence D1 and the third sequence D3, and outputs a determination result.

## Description

### Technical Field

The present invention relates to a method, a device, and a program for determining a difference between data sequences.

### Background Art

There has been well-known a method for measuring and evaluating data for a vehicle test or the like. Patent Literature 1 discloses an example of the method.

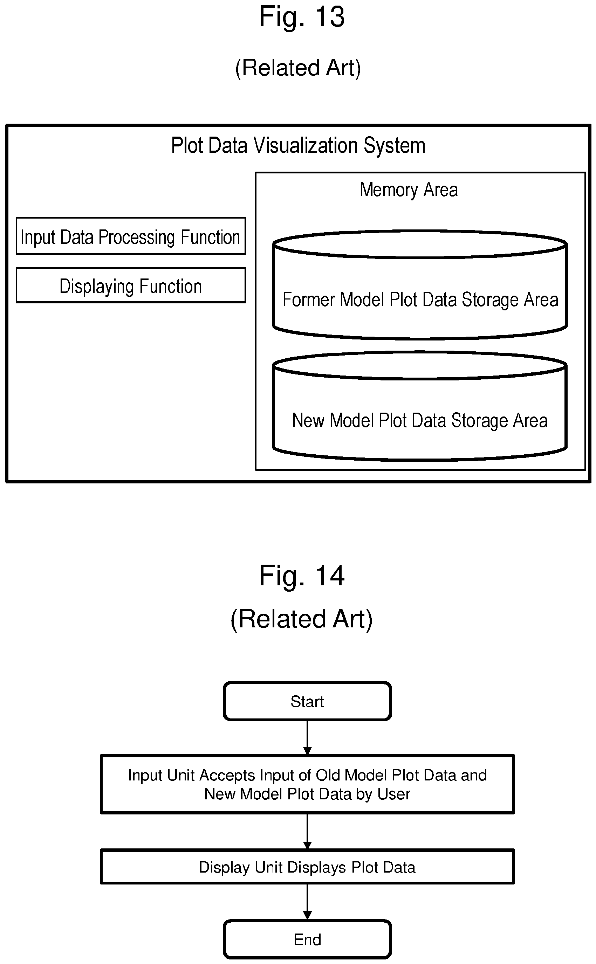

In the data evaluation, differences between a plurality of data sequences acquired by different measuring activities are evaluated in some cases. Fig. 13 illustrates an exemplary configuration of a plot data visualization system used for the evaluation. A conventional plot data visualization system provides an input data processing function and a displaying function, and stores plot data (data sequence) on a former model and plot data on a new model in a memory area.

Fig. 14 illustrates an exemplary flowchart of a plot data visualization method according to a related art. The plot data visualization system first accepts inputs of plot data on an old model and plot data on a new model from a user by the input processing function, and next displays the plot data by the displaying function.

### Citation List

### Patent Literature

Patent Literature 1: JP 2017-58357 A

### Summary of Invention

### Technical Problem

However, the conventional technique has a problem that evaluating differences between a plurality of data sequences acquired by different measuring activities is difficult.

For example, in an evaluation of an automobile product, for confirming whether an unexpected difference between a former model and a new model has occurred or not, data on the former model is compared with data on the new model to evaluate the difference in some cases. In such a case, for performing an accurate evaluation, aligning data sequences of the former model and the new model (for example, matching measurement starting times to one another) is required.

In the conventional technique, an operator performs this aligning operation by visual check, and since it takes time, quick processing is difficult. Additionally, the aligning operation by visual check does not necessarily achieve the appropriate alignment, and therefore improving the accuracy of the difference evaluation is difficult.

The present invention is made to solve the problems, and has an object to provide a method, a device, and a program for determining a difference between data sequences that further facilitate an evaluation of the differences between the plurality of data sequences.

### Solution to Problem

An example of a method according to the present invention is a method for determining a difference between data sequences. The method comprises: a step of acquiring a first sequence and a second sequence; a shifting step of shifting the second sequence so as to increase a correlation coefficient between the first sequence and the second sequence to acquire a third sequence; a determining step of determining a difference between the first sequence and the third sequence; and an outputting step of outputting a determination result.

An example of a device according to the present invention determines a difference between data sequences by executing the above-described method.

An example of a program according to the present invention causes a computer to execute the above-described method.

This Description encompasses content disclosed in Japanese Patent Application No. 2020-191919 forming the basis for priority of this application.

### Advantageous Effects of Invention

The method, the device, and the program for determining the difference between data sequences according to the present invention further facilitate the evaluation of the differences between the plurality of data sequences.

### Brief Description of Drawings

Fig. 1 is a drawing illustrating an exemplary configuration of a difference determination device according to Embodiment 1 of the invention.
Fig. 2 is a drawing illustrating an example of expressing function blocks of the difference determination device of Fig. 1.
Fig. 3 is a drawing illustrating an exemplary configuration of a data sequence.
Fig. 4 is an exemplary flowchart indicating a method executed by the difference determination device of Fig. 1.
Fig. 5 is a drawing illustrating a specific example of two sequences acquired in Step S1 of Fig. 4.
Fig. 6 is an exemplary screen configuration of a GUI usable in Steps S1 and S2 of Fig. 4.
Fig. 7 is an exemplary formula for calculating a correlation coefficient.
Fig. 8 is a drawing illustrating a specific example of a third sequence acquired in Step S3 of Fig. 4.
Fig. 9 is a drawing for describing a specific example of a process of assigning a grade of a difference.
Fig. 10 is a drawing illustrating an exemplary output of a determination result.
Fig. 11 is an exemplary flowchart illustrating a more specific processing procedure in Step S3 of Fig. 4.
Fig. 12 is an exemplary flowchart illustrating a more specific processing procedure in Step S5 of Fig. 4.
Fig. 13 is a drawing illustrating an exemplary configuration of a conventional plot data visualization system.
Fig. 14 is an exemplary flowchart of a conventional plot data visualization method.

### Description of Embodiments

The following describes embodiments of the present invention based on the attached drawings.

### [Embodiment 1]

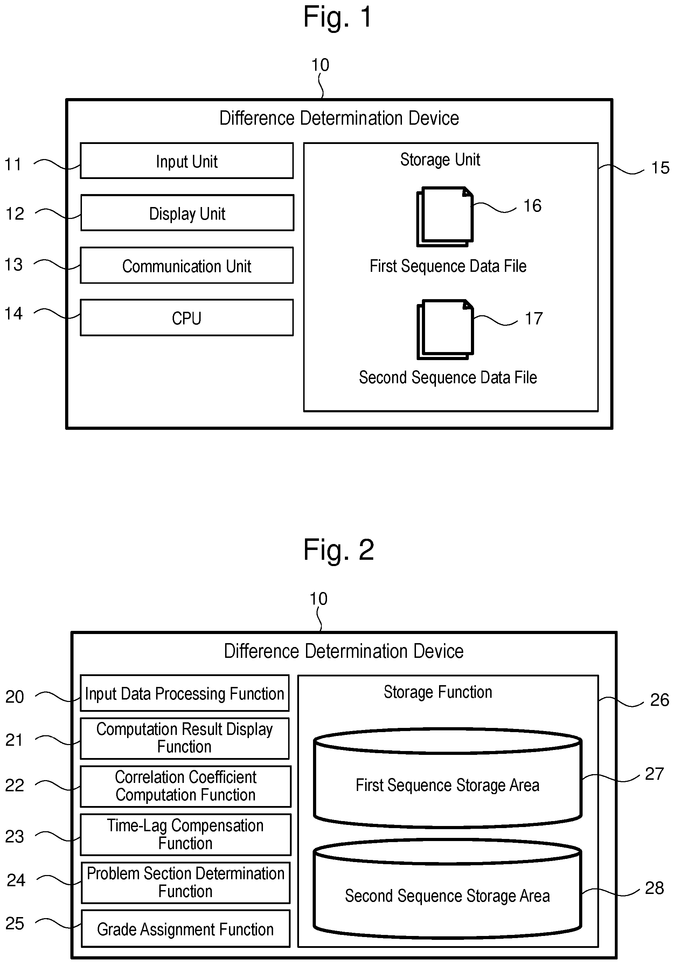

Fig. 1 illustrates an exemplary configuration of a difference determination device 10 according to Embodiment 1 of the present invention. The difference determination device 10 is a device that executes a method described in this Description to determine a difference between data sequences.

The difference determination device 10 can be configured using, for example, a publicly known computer. The difference determination device 10 includes, for example, an input unit 11, a display unit 12, a communication unit 13, a CPU 14, and a storage unit 15.

The input unit 11 includes, for example, a keyboard and a computer mouse. The display unit 12 includes, for example, a liquid crystal display. The communication unit 13 includes, for example, a network interface. The CPU 14 functions as a computation device. The storage unit 15 includes, for example, a semiconductor memory and a magnetic disk device. The storage unit 15 can store a plurality of data sequences. For example, a first sequence data file 16 and a second sequence data file 17 are stored.

The storage unit 15 may store a program (not illustrated). The difference determination device 10 may achieve functions described in this Description by executing this program by the CPU 14. That is, this program is a program that cause a computer to execute the method described in this Description.

Fig. 2 illustrates an example of expressing function blocks of the difference determination device 10. The difference determination device 10 provides an input data processing function 20, a computation result display function 21, a correlation coefficient computation function 22, a time-lag compensation function 23, a problem section determination function 24, a grade assignment function 25, and a storage function 26. The storage function 26 achieves a first sequence storage area 27 and a second sequence storage area 28. These functions may be provided by the mutual collaboration of the input unit 11, the display unit 12, the communication unit 13, the CPU 14, and the storage unit 15 illustrated in Fig. 1.

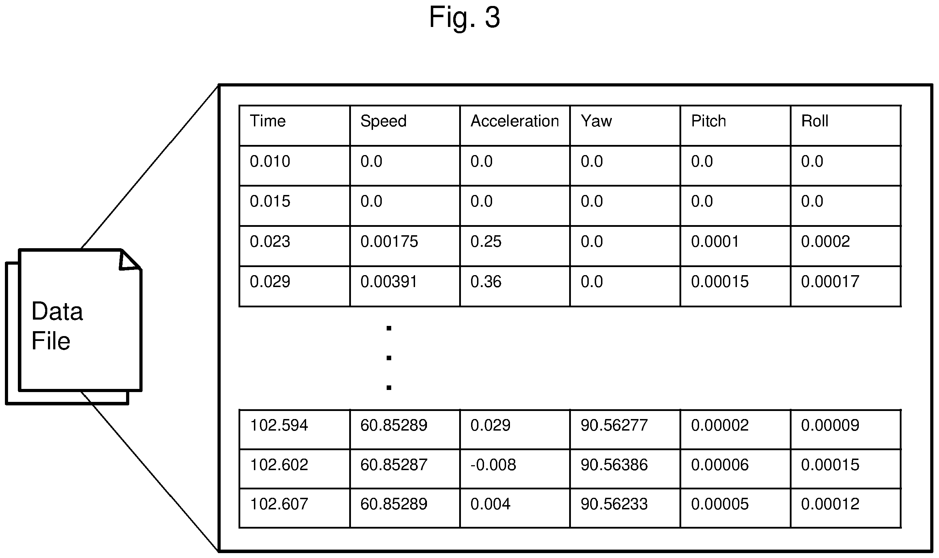

Fig. 3 illustrates an exemplary configuration of a data sequence. While this exemplary configuration illustrates, for example, a configuration according to the first sequence, the second sequence can be configured in the similar format. In the data sequence, a plurality of data elements are mutually associated. In the example of Fig. 3, a sequence includes a plurality of rows and six columns, and in each row, a data element indicating a time, a data element indicating a speed, a data element indicating an acceleration, a data element indicating a yaw, a data element indicating a pitch, and a data element indicating a roll are mutually associated.

While the example of Fig. 3 includes the data elements of six columns, a sequence includes data of two columns in this embodiment. For example, the example of Fig. 3 includes a sequence including a time and a speed, a sequence including a time and an acceleration, a sequence including a time and a yaw, a sequence including a time and a pitch, and a sequence including a time and a roll.

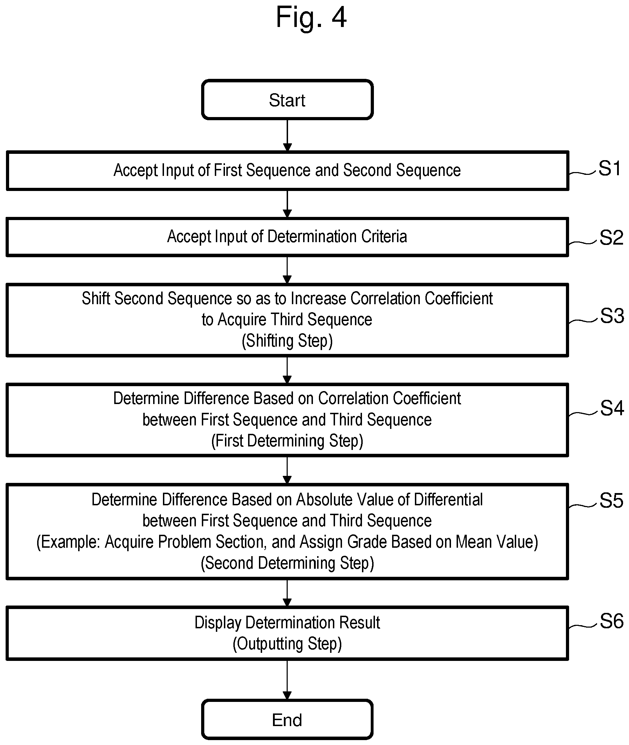

Fig. 4 illustrates an exemplary flowchart indicating a method executed by the difference determination device 10. This flowchart indicates a method for determining a difference between data sequences. Note that, in the description of the operation of the difference determination device 10, while the means that executes the respective processes in the difference determination device 10 is not necessarily specifically identified, those skilled in the art can appropriately design each of the processes (for example, a process of inputting data on a screen can be designed as a process of achieving the input data processing function 20 by the collaboration of the input unit 11, the display unit 12, the CPU 14, and the storage unit 15 based on a well-known technique).

In the process of Fig. 4, first, the difference determination device 10 acquires the first sequence and the second sequence (Step S1). For example, the first sequence is plot data on a former model, and the second sequence is plot data on a new model. In this embodiment, each of the sequences is a set of tuples each including two data elements (for example, time and speed). Especially, in this embodiment, each of the sequences is time series data. The process of Step S1 is achieved via, for example, the input data processing function 20.

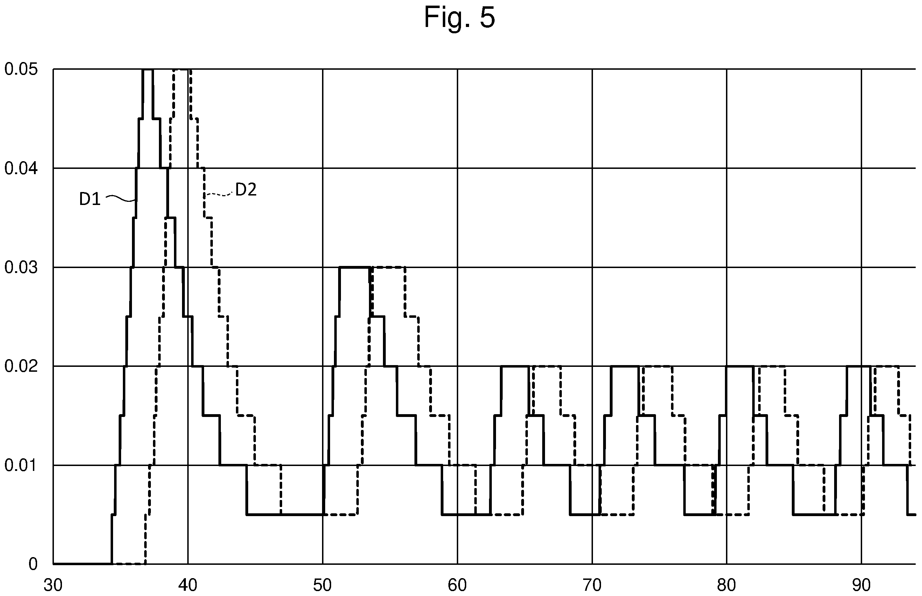

Fig. 5 illustrates a specific example of the two sequences acquired in Step S1. The horizontal axis indicates time (for example, ms), and the vertical axis indicates speed (for example, m/s). A first sequence D1 is illustrated by a solid line, and a second sequence D2 is illustrated by a dashed line. In this example, as a result of a time lag between measurement processes of the first sequence D1 and the second sequence D2, the change of the second sequence D2 is appeared to be delayed, that is, displaced to the right side with respect to the first sequence D1. In view of this, it can be said that directly comparing these sequences is inappropriate.

By referring to Fig. 4 again, after Step S1, the difference determination device 10 accepts an input of a determination criteria (Step S2). The determination criteria are information as criteria in determining whether a difference is present between the sequences or not, or determining a degree of the difference.

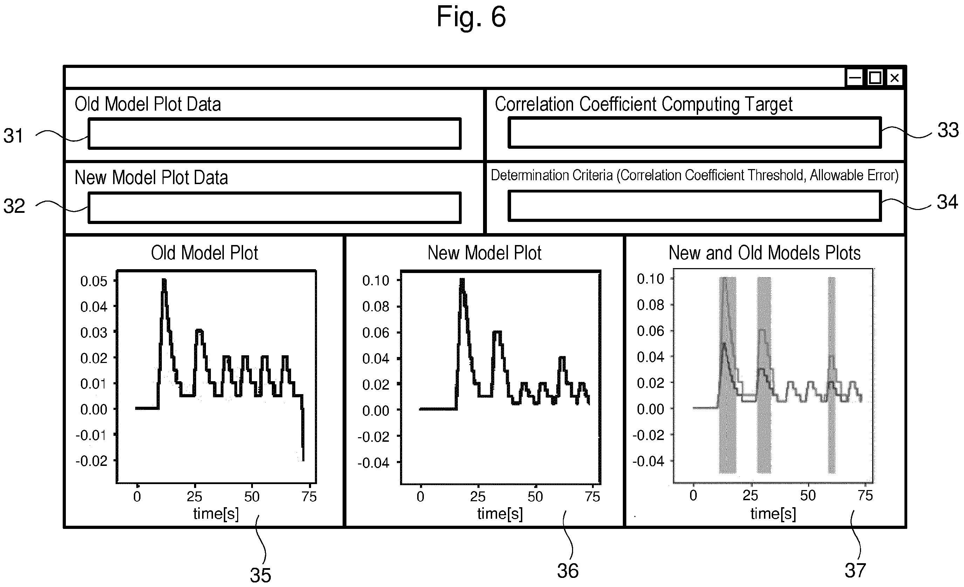

Fig. 6 illustrates an exemplary screen configuration of a Graphic User Interface (GUI) usable in Steps S1 and S2 (and Step S6 described later). The GUI includes a file name entry field 31 into which the file name of data including the first sequence is input, a file name entry field 32 into which the file name of data including the second sequence is input, an item name entry field 33 into which an item name with a correlation coefficient to be calculated is input, and a reference value entry field 34 into which a reference value used for the determination is input. The reference value may include a threshold of the correlation coefficient described later relating to Step S4 and an allowable error described later relating to Step S5.

Thus, since the difference determination device 10 can accept the reference value via the GUI, the reference value can be easily changed, and determination on measurement data having various values can be performed.

The GUI may include a first sequence display area 35 indicating the first sequence, a second sequence display area 36 indicating the second sequence, and a difference display area 37 indicating a difference between the first sequence and the second sequence.

By referring to Fig. 4 again, after Step S2, the difference determination device 10 acquires a third sequence by shifting the second sequence so as to increase the correlation coefficient between the first sequence and the second sequence (Step S3, shifting step). Especially, in this embodiment, the second sequence is shifted such that the correlation coefficient becomes maximum. Here, "sequence is shifted" means that the data elements of one column are all increased or decreased by the same value, and for example, corresponds to that a waveform is shifted in parallel on a two-dimensional plot diagram. In this embodiment, the second sequence is shifted with respect to time, that is, the waveform is shifted in parallel in a time axis direction. Here, since the second sequence is time series data, the third sequence is also time series data.

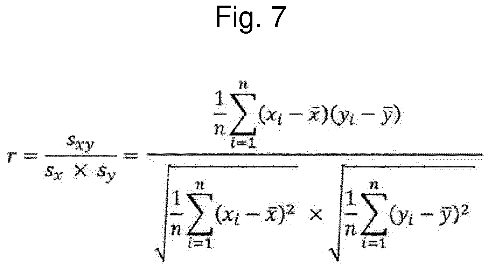

While the definition and the calculation method of the correlation coefficient can be appropriately designed based on a publicly known document by those skilled in the art, for example, the correlation coefficient can be calculated based on a formula illustrated in Fig. 7. In Fig. 7, r indicates a correlation coefficient between a sequence ***x*** and a sequence ***y.*** The sequences ***x*** and ***y*** include ***n*** pieces of data elements ***xᵢ*** and elements ***yᵢ,*** respectively (note that, 1 ≤ *i* ≤ ***n***), and signs with bars over ***x*** and *y* indicate mean values of the data elements in the sequences ***x*** and ***y*,** respectively. The correlation coefficient ***r*** is a value of -1 or more and 1 or less, and indicates that the closer to 1 the value is, the higher the positive correlation is.

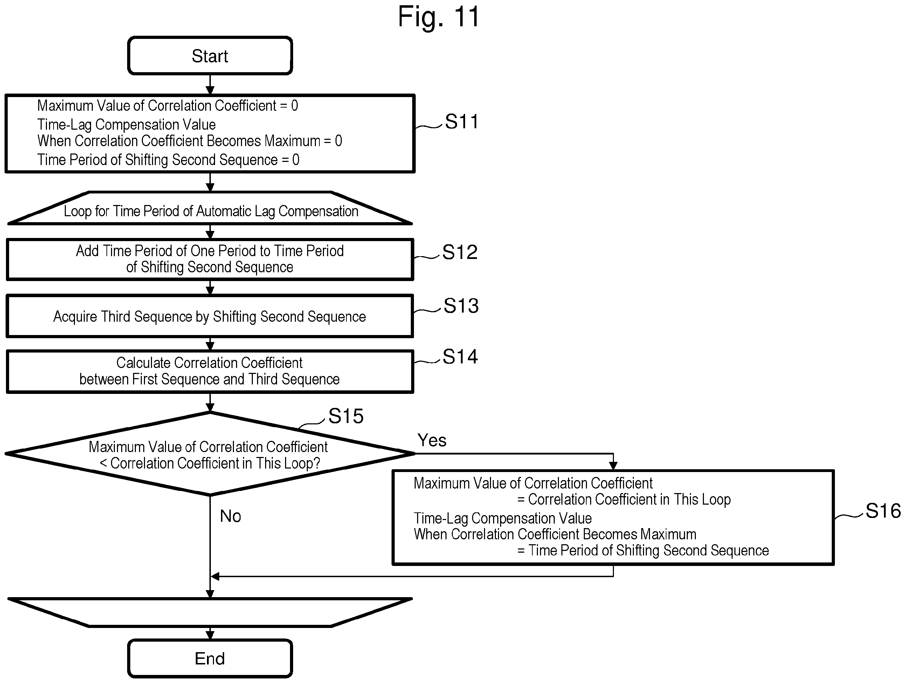

The process of Step S3 can be achieved via, for example, the correlation coefficient computation function 22 and the time-lag compensation function 23. An example of the more specific processing procedure in Step S3 will be described later with reference to Fig. 11.

Thus, since the second sequence can be automatically shifted based on the correlation coefficient, a manual operation of the visual check by the operator is eliminated. Additionally, the appropriate alignment of the sequences based on the accurate computing is achieved. Especially, shifting such that the correlation coefficient becomes maximum achieves the optimal alignment.

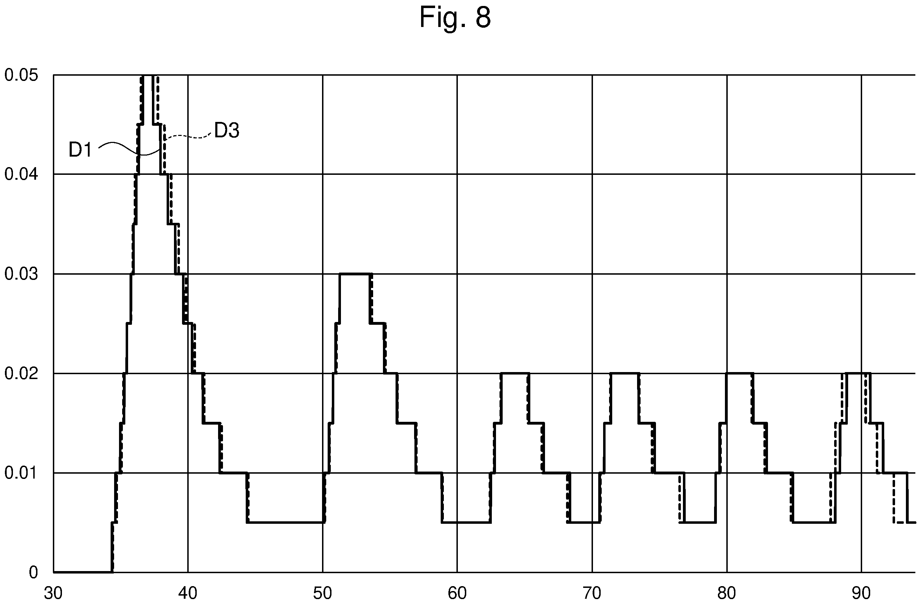

Fig. 8 illustrates a specific example of the third sequence acquired in Step S3. The respective axes are similar to those in Fig. 5. The first sequence D1 is illustrated by a solid line, and a third sequence D3 is illustrated by a dashed line. In comparison with Fig. 5, while the first sequence D1 is not much aligned with the second sequence D2 with respect to time, the first sequence D1 is well aligned with the third sequence D3 with respect to time, and it can be said that the first sequence D1 can be more precisely compared with the third sequence D3.

After Step S3 the difference determination device 10 executes Steps S4 and S5 to determine the difference between the first sequence D1 and the third sequence D3 (determining step).

First, the difference determination device 10 determines the difference based on the correlation coefficient between the first sequence D1 and the third sequence D3 (Step S4, first determining step). The difference determination process is performed, for example, based on the comparison between the correlation coefficient and a predetermined threshold. The threshold can be input as a part of the determination criteria in Step S2 (for example, a reference value entry field 34 of Fig. 6). If the correlation coefficient is equal to or less than the threshold, it is determined that a difference is present between the first sequence D1 and the third sequence D3, and if the correlation coefficient exceeds the threshold, it is determined that no difference is present between the first sequence D1 and the third sequence D3.

The threshold can be set to, for example, 0.9. In this case, if the correlation coefficient is, for example, 0.99, it is determined that there is no difference, and if the correlation coefficient is, for example, 0.89, it is determined that a difference is present.

Next, the difference determination device 10 determines the difference based on an absolute value of a differential between the first sequence D1 and the third sequence D3 (Step S5, second determining step). Here, the differential means a differential of a data element other than the shifted data element, and means a differential of the data element of the speed in Embodiment 1. For example, the absolute values of the differentials between the speeds of the first sequence D1 and the speeds of the third sequence D3 at respective times are calculated.

The difference determination process is performed, for example, based on the comparison between the maximum value of the absolute values of the differentials (maximum error) and a predetermined threshold (allowable error). The allowable error can be input as a part of the determination criteria in Step S2 (for example, a reference value entry field 34 of Fig. 6). If the maximum error is less than the allowable error, it is determined that no difference is present between the first sequence D1 and the third sequence D3, and if the maximum error is equal to or more than the allowable error, it is determined that a difference is present between the first sequence D1 and the third sequence D3.

In the example of Fig. 8, the allowable error can be set to, for example, 0.02. In this case, if the maximum error is, for example, 0.005, it is determined that no difference is present, and if the maximum error is, for example, 0.055, it is determined that a difference is present.

If it is determined that a difference is present in Step S5, the difference determination device 10 performs a grade assignment of the difference. In this case, the difference determination device 10 first acquires a section wherein the absolute value of the differential is equal to or more than the allowable error (hereinafter referred to as a "problem section"), and calculates a mean value of the absolute values of the differentials for each problem section. Then, the grade of the difference is decided based on the mean value for each problem section. These processes can be achieved via, for example, the problem section determination function 24 and the grade assignment function 25.

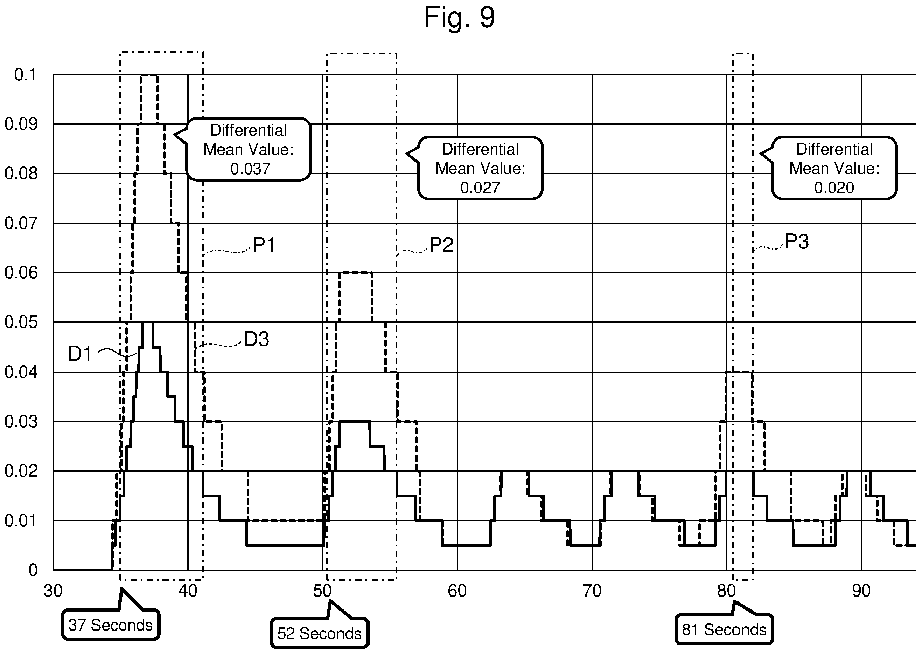

With reference to Fig. 9, a specific example of the process of the grade assignment of the difference will be described. For convenience of explanation, contents of respective sequences illustrated in Fig. 9 are different from those in Fig. 5 and Fig. 8.

The difference determination device 10 acquires a section wherein the absolute value of the differential is equal to or more than the allowable error. In the example of Fig. 9, as a section wherein the absolute value of the differential is the allowable error of 0.02 or more, problem sections P1 to P3 are acquired. The problem section P1 starts at the time of 37 seconds, and the mean value of the absolute value of the differential is 0.037. The problem section P2 starts at the time of 52 seconds, and the mean value of the absolute value of the differential is 0.027. The problem section P3 starts at the time of 81 seconds, and the mean value of the absolute value of the differential is 0.020.

The grade of the difference in each problem section is decided so as to be increased as the mean value becomes large. For example, if the mean value is less than double of the allowable error, a grade A as the lowest grade is assigned, if the mean value is double or more and less than triple of the allowable error, a grade B higher than the grade A is assigned, if the mean value is triple or more and less than quad of the allowable error, a grade C higher than the grade B is assigned, and if the mean value is quad or more of the allowable error, a grade D as the highest grade is assigned. According to these criteria, in the example of Fig. 9, the problem sections P1 to P3 are all assigned with the grade A.

The above-described Steps S4 and S5 constitute the determining step. If it is determined that no difference is present based on the correlation coefficient in Step S4 and that no difference is present based on the absolute value of the differential in Step S5, it is determined that no difference is present between the first sequence D1 and the third sequence D3. On the other hand, if it is determined that a difference is present in any or both of Steps S4 and S5, it is determined that a difference is present between the first sequence D1 and the third sequence D3.

Thus, by performing the final determination with the combination of a plurality of determinations, the multifaceted determination can be achieved, and the determination criteria can be flexibly set.

After Step S5, the difference determination device 10 outputs the determination result (Step S6, outputting step). The process of Step S6 is achieved by display via, for example, the computation result display function 21.

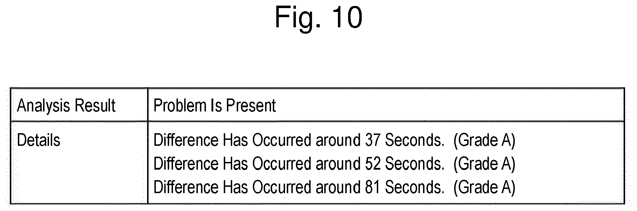

Fig. 10 illustrates the output example of the determination result. This output example corresponds to the example of Fig. 9. Since there is the difference between the first sequence D1 and the third sequence D3, "Problem Is Present" is displayed in an analysis result field. If no difference is present between the first sequence D1 and the third sequence D3, "No Problem" is displayed in the analysis result field.

In a details field, pieces of information on respective problem sections are output. In this example, the first row corresponds to the problem section P1, the second row corresponds to the problem section P2, and the third row corresponds to the problem section P3. As the information for identifying the respective problem sections, starting times of the respective problem sections are displayed (for example, for the problem section P1, "around 37 seconds" is displayed).

The information indicating the respective problem sections may be output according to a specific order. In the example of Fig. 10, for the respective problem sections, pieces of the information indicating the problem sections are output according to an order based on the mean value of the problem section (as described above, the mean values in the problem sections P1, P2, and P3 are 0.037, 0.027, and 0.020, respectively). The grades may be output for the respective problem sections.

Thus, since the difference determination device 10 outputs the problem sections in the descending order of the mean value as the evaluation result, the section with the especially large difference can be easily recognized, and the section to be preferentially dealt with can be quickly decided.

The difference determination device 10 may display the determination result in the difference display area 37 (Fig. 6) together with the illustrations of the respective sequences. In the example of Fig. 6, the problem sections are colored to be distinguished from the other sections, thus allowing easily recognizing them.

While only the determination result of Step S5 is indicated and the determination result of Step S4 is not indicated in the example of Fig. 10, the determination result of Step S4 may be indicated in addition to or instead of the display contents of Fig. 10. For example, if the correlation coefficient exceeds the threshold in Step S4, a message of "Plot Data are Significantly Different between Former Model and New Model" may be displayed.

In the output of the determination result, other information on the determination process may be output. For example, the time period of shifting the second sequence in Step S3, the correlation coefficient calculated in Step S4, whether a difference is determined to be present or not in Step S5, the maximum error calculated in Step S5, the mean value calculated in Step S5, a duration or an ending time of the problem section acquired in Step S5, or the like may be output.

The output of the determination result may be performed by the GUI of Fig. 6. For example, a graph illustrated in Fig. 9 may be displayed in the difference display area 37.

As described above, since the difference determination device 10 according to Embodiment 1 of the present invention can automatically and appropriately shift the second sequence based on the correlation coefficient, the manual operation by the operator's visual check is eliminated. The appropriate alignment of the sequences based on the accurate computation is achieved. Thus, the evaluation of the differences between a plurality of data sequences can be further facilitated.

Fig. 11 illustrates an exemplary flowchart illustrating a more specific processing procedure in Step S3 of Fig. 4.

First, the difference determination device 10 initializes variables (Step S11). That is, the maximum value of the correlation coefficient is set to 0, a time-lag compensation value when the correlation coefficient becomes maximum is set to 0, and a time period of shifting the second sequence is set to 0.

Next, the difference determination device 10 executes Steps S12 to S16 below in a loop for a time period of automatic lag compensation. Here, the "time period of automatic lag compensation" means a time period of shifting the second sequence, and increases from 0 to a predetermined maximum compensation range (time period) by a unit of a constant period. This maximum compensation range is a preliminarily determined value (for example, five seconds), and may be configured to be input via, for example, the GUI of Fig. 6 (an individual entry field is not specifically illustrated).

In the loop, the difference determination device 10 first adds a time period of one period to the time period of shifting the second sequence (Step S12). This period may be, for example, a measurement cycle of the second sequence, or may be appropriately designatable value. For example, a configuration in which the period can be input via the GUI of Fig. 6 may be employed.

Next, the difference determination device 10 acquires the third sequence by shifting the second sequence (Step S13), and calculates the correlation coefficient between the first sequence and the third sequence (Step S14). Then, whether the correlation coefficient calculated in Step S14 in the loop being processed is larger than the maximum value of the correlation coefficient or not is determined (Step S15).

If the determination is YES in Step S15, the correlation coefficient calculated in Step S14 in the loop being processed is assigned to the variable indicating the maximum value of the correlation coefficient, and the time period of shifting the second sequence in the loop being processed is assigned to the variable indicating the time-lag compensation value when the correlation coefficient becomes maximum (Step S16). If the determination is NO in Step S15, Step S16 is not executed. Subsequently, the process enters the next loop.

By the processing procedure as described above, those skilled in the art can execute Step S3 of Fig. 4.

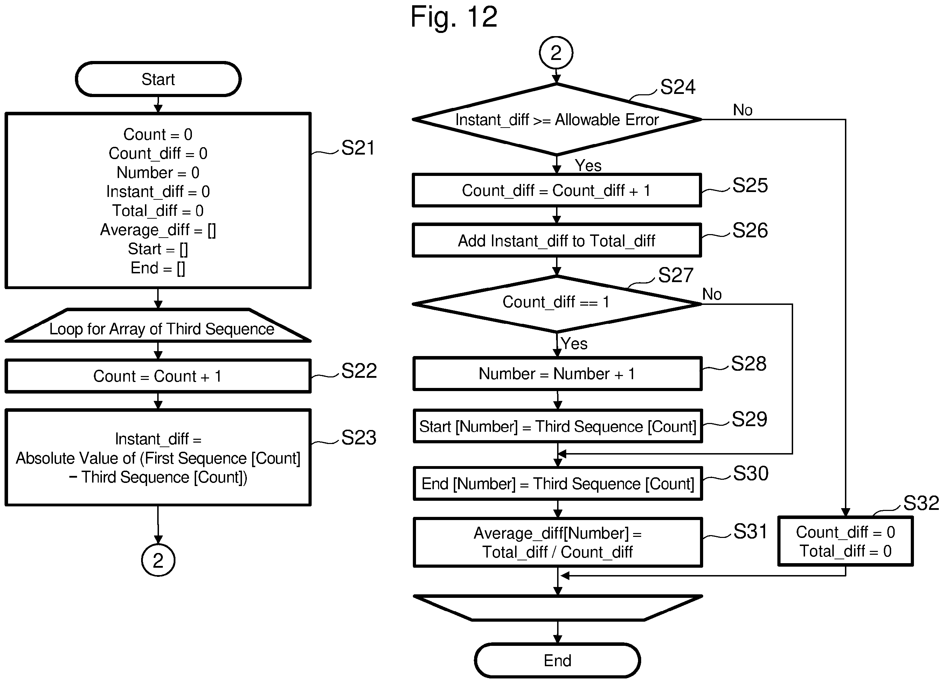

Fig. 12 illustrates an exemplary flowchart illustrating a more specific processing procedure in Step S5 of Fig. 4.

First, the difference determination device 10 initializes variables (Step S21). Definitions of the respective variables illustrated in Step S21 of Fig. 12 are as follows, and signs of [ ] indicate arrays.
Count: loop count
Count_diff: count of continuous occurrence of difference equal to or more than allowable error
Number: number of sections (problem sections) in which difference equal to or more than allowable error has occurred
Instant_diff: value of difference equal to or more than allowable error
Total_diff: summed value of differences in problem section being processed
Average_diff [ ]: mean value of differences in problem section being processed
Start [ ]: time at which occurrence of difference equal to or more than allowable error starts (problem section starting time)
End [ ]: ending time of time slot in which difference equal to or more than allowable error continuously occurs (problem section ending time)

Next, the difference determination device 10 executes Steps S22 to S32 below in a loop for elements of the array of the third sequence. This array is one indicating the data element (for example, speed) other than the shifted data element (for example, time) as an array. Hereinafter, the arrays of the first sequence and the third sequence are expressed as a first sequence [*i*] and a third sequence [i], respectively (note that, *i* is an integer indicating an index).

In the loop, the difference determination device 10 first increments the value of Count by only 1 (Step S22). Next, an absolute value of first sequence [Count] - third sequence [Count] is assigned to Instant_diff (Step S23). Then, whether Instant_diff is equal to or more than the allowable error or not is determined (Step S24).

If Instant_diff is determined to be equal to or more than the allowable error (that is, to be the problem section) in Step S24, Steps S25 to S31 described below are executed. Otherwise (that is, not to be the problem section), Count_diff and Total_diff are set to 0 (Step S32), and the process enters the next loop.

If Instant_diff is determined to be equal to or more than the allowable error (that is, to be the problem section), the difference determination device 10 first increments Count_diff by only 1 (Step S25), and adds Instant_diff to Total_diff (Step S26).

Next, the difference determination device 10 determines whether Count_diff is equal to 1 or not (Step S27). If Count_diff is equal to 1 (that is, immediately after the start of the problem section), Number is incremented by only 1 (Step S28), the number of the problem sections detected so far is counted, the third sequence [Count] is assigned to Start [Number], and the starting time of the problem section is stored (Step S29).

After Step S29, or if Count_diff is not equal to 1 in Step S27 (that is, if the problem section continues), the third sequence [Count] is assigned to End [Number] (Step S30). Since Steps S28 and S29 are not executed if the problem section continues, the value of Start [Number] is kept, and only End [Number] is incremented.

Next, the difference determination device 10 divides Total_diff by Count_diff, and assigns the quotient to Average_diff [Number] (Step S31). Thus, the mean value of the absolute values of the differentials in the problem section is calculated. Subsequently, the process enters the next loop.

By the processing procedure as described above, those skilled in the art can execute Step S5 of Fig. 4.

In the above-described Embodiment 1, modifications below can be made. While the difference determination device 10 of Embodiment 1 determines the difference of single data type (for example, speed) in two sequences, the difference may be determined for a plurality of data types. For example, based on the data as illustrated in Fig. 3, the difference of the speed and the difference of the acceleration may each be determined. In this case, in the output of the result, two patterns of the determination result may be aligned to be displayed. As a specific example, two graphs may be arranged one above the other having the horizontal axis indicating the time in common. With this configuration, the relation between a plurality of types of data can be easily recognized.

While each of the sequences is time series data, and shifted based on the time in Embodiment 1, the sequence may be one without an element regarding the time, and may be shifted based on the data element other than the time.

While the difference determination device 10 is configured by a single computer in Embodiment 1, the difference determination device 10 may be configured by a system including a plurality of computers. All the publications, patents, and patent applications cited in the Description are directly incorporated herein as references.

### Reference Signs List

- 10: Difference determination device (device for determining difference)
- 31, 32: File name entry field
- 33: Item name entry field
- 34: Reference value entry field
- 35: First sequence display area
- 36: Second sequence display area
- 37: Difference display area
- D1: First sequence
- D2: Second sequence
- D3: Third sequence

## Claims

1. A method for determining a difference between data sequences, comprising:
a step of acquiring a first sequence and a second sequence;
a shifting step of shifting the second sequence so as to increase a correlation coefficient between the first sequence and the second sequence to acquire a third sequence;
a determining step of determining a difference between the first sequence and the third sequence; and
an outputting step of outputting a determination result.

2. The method according to claim 1,
wherein the determining step is executed based on a correlation coefficient between the first sequence and the third sequence.

3. The method according to claim 1,
wherein the determining step is executed based on an absolute value of a differential between the first sequence and the third sequence.

4. The method according to claim 1,
wherein the determining step includes:
a first determining step of determining a difference based on the correlation coefficient between the first sequence and the third sequence; and
a second determining step of determining a difference based on the absolute value of the differential between the first sequence and the third sequence, and
wherein if it is determined that no difference is present in both of the first determining step and the second determining step, it is determined that no difference is present between the first sequence and the third sequence.

5. The method according to claim 3,
wherein the determining step includes:
a step of acquiring a section wherein the absolute value of the differential is equal to or more than a predetermined threshold; and
a step of calculating a mean value of the absolute values of the differentials for each of the sections.

6. The method according to claim 5,
wherein the determining step further includes a step of deciding a grade of the difference based on the mean value for each of the sections.

7. The method according to claim 5,
wherein in the outputting step, for the respective sections, pieces of information indicating the sections are output according to an order based on the mean values of the sections.

8. The method according to claim 1,
wherein the first sequence, the second sequence, and the third sequence are each time series data, and
wherein in the shifting step, the second sequence is shifted with respect to time.

9. The method according to claim 1,
wherein in the shifting step, the second sequence is shifted such that the correlation coefficient becomes maximum.

10. The method according to claim 1,
wherein the method further includes a step of accepting an input of a reference value used in the determining step via a GUI.

11. A device for determining a difference between data sequences by executing the method according to any one of claims 1 to 10.

12. A program that causes a computer to execute the method according to any one of claims 1 to 10.
